Europäisches Patentamt

(19) **European Patent Office**

**Office européen des brevets**

(11) Numéro de publication: **0 018 934
B1**

(12) **FASCICULE DE BREVET EUROPEEN**

(45) Date de publication du fascicule du brevet:
**21.09.83**

(21) Numéro de dépôt: **80450001.5**

(22) Date de dépôt: **25.04.80**

(51) Int. Cl.³: **B 26 D 7/22**

(54) **Dispositif de protection adaptable sur les coupeuses à lames verticales.**

(30) Priorité: **26.04.79 FR 7911214**

(43) Date de publication de la demande:
**12.11.80 Bulletin 80/23**

(45) Mention de la délivrance du brevet:
**21.09.83 Bulletin 83/38**

(84) Etats contractants désignés:
**AT BE CH DE GB IT LI LU NL SE**

(56) Documents cités:
**GB-A-1 443 001
US-A-3 848 502
US-A-3 939 749**

(73) Titulaire: **Creton, Claude, Résidence Acacias - Bt
E3 Avenue de Saige, F-33600 Pessac (FR)**

(72) Inventeur: **Creton, Claude, Résidence Acacias - Bt
E3 Avenue de Saige, F-33600 Pessac (FR)**

(74) Mandataire: **Trolliet, Jean-Claude, Cabinet
BURDIPAT 20, cours du Chapeau Rouge,
F-33000 Bordeaux (FR)**

ACTORUM AG

Dispositif de protection adaptable sur les coupeuses à lames verticales

La présente invention concerne un dispositif de protection adaptable aux coupeuses à lames verticales comprenant une tôle de carénage et de protection de la lame fixée sur un barreau coulissant dans une glissière verticale fixée sur la coupeuse, l'élévation de la tôle étant engendrée par contact d'une roue animée en rotation s'appuyant sur le barreau, la descente étant provoquée lors du désemparage de la roue du barreau. Un tel dispositif de protection est connu du brevet US-A 3 939 749.

L'invention a pour but de réaliser un dispositif de protection pour coupeuses à lames verticales du type ci-dessus et possédant en particulier un mécanisme de mise en marche et d'interruption plus simple et offrant une sécurité accrue.

Ce but est obtenu par la rotation de la roue au moyen d'un moto-réducteur solidaire d'une plaque support articulée sur la glissière lors de la préhension de la poignée servant à diriger la coupeuse, ladite poignée étant pourvue de deux fils incrustés enroulés en hélicoïde constituant deux pôles dont la liaison au contact de la peau humaine établit la mise en marche du moto-réducteur.

D'autres caractéristiques et avantages de l'invention ressortiront plus clairement de la description qui va suivre faite en regard des dessins joints donnés à titre d'exemple non limitatif, où:
- la fig. 1 représente une vue de profil du dispositif en cours d'effacement,
- la fig. 2, une vue de profil du dispositif en position abaissée,
- la fig. 3, une vue de dessus du dispositif,
- la fig. 4, une variante de réalisation permettant la retombée du dispositif de protection en cas d'arrêt d'alimentation de courant, tant volontaire qu'involontaire, la figure représentant le dispositif de protection abaissé,
- la fig. 5, la variante de réalisation, le dispositif de protection en cours d'élévation et/ou d'effacement.

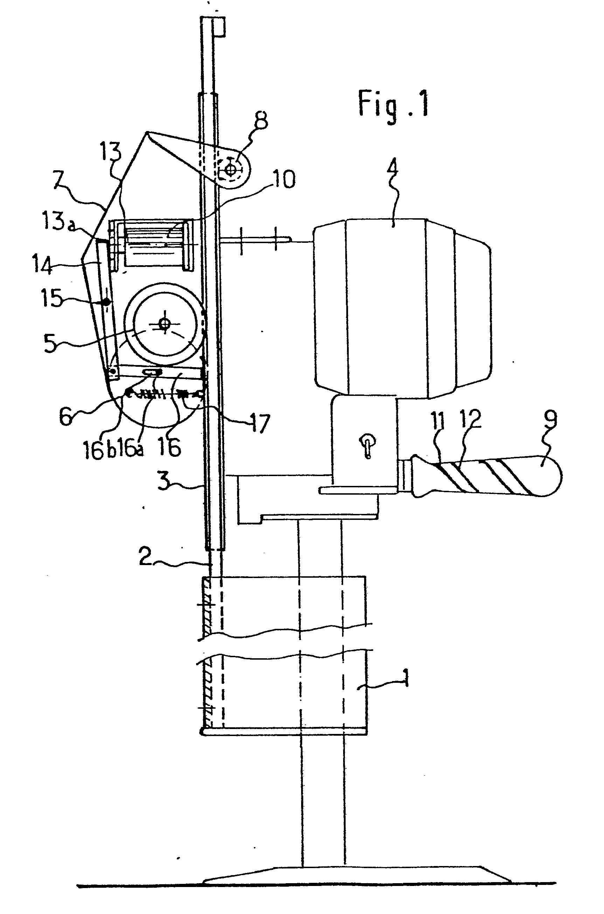

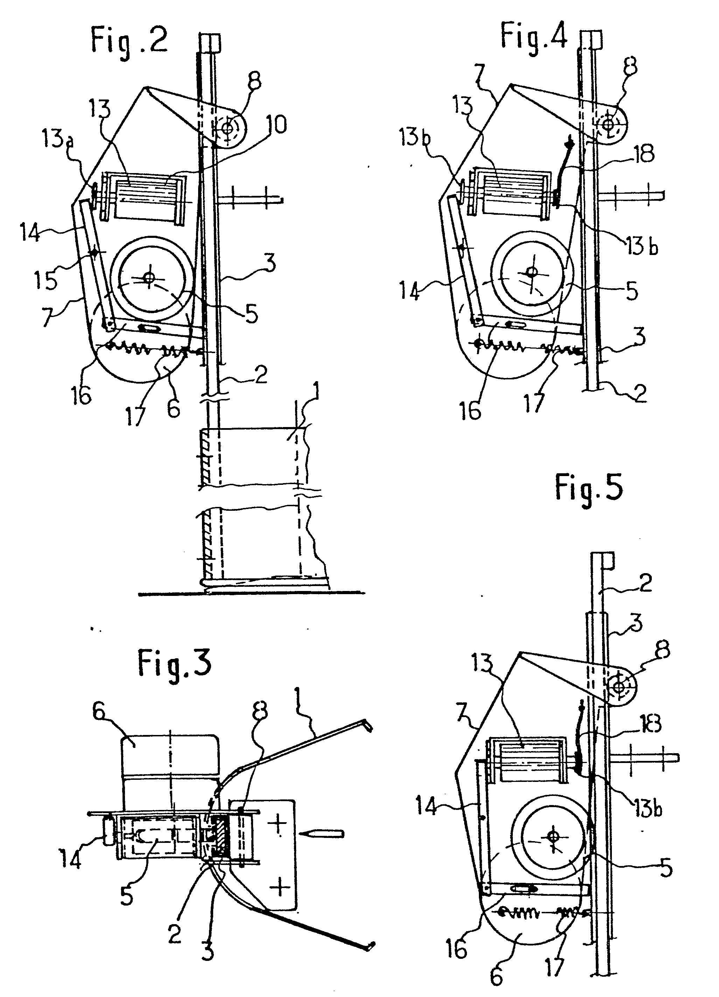

Tel que représenté figs 1, 2 et 3, le dispositif de protection comporte une tôle de carénage et de protection 1 fixée sur un barreau mobile 2 coulissant dans une glissière 3 fixée à la coupeuse 4. Le déplacement du barreau 2 dans la glissière 3 provoquant l'effacement de la tôle de carénage et de protection est engendré par une roue caoutchoutée 5 en appui sur le barreau 2, ladite roue 5 est entraînée en rotation par un moto-réducteur 6 fixé sur la plaque support 7 articulée en 8 sur la glissière 3. La mise en marche du moto-réducteur 6 et de ce fait l'effacement de la tôle de carénage 1 a lieu lors de la préhension de la poignée 9 de la machine 4 servant à diriger ladite machine et ce au simple contact de la peau humaine qui fait exciter la bobine du relais 10 dotée d'un électro-aimant 13, couplée avec le moto-réducteur 6, l'excitation de la bobine du relais 10 qui fait coller celui-ci est provoquée lorsque les deux pôles constitués chacun par un fil métallique séparé, 11 et 12, incrusté et enroulé en hélicoïde sur la poignée, sont reliés par le simple contact de la peau humaine. L'élévation et/ou effacement de la tôle de carénage 1 est interrompue au point mort haut au moyen d'un fin de course non représenté. Lorsqu'on libère la poignée et de ce fait que l'on interrompt la liaison des deux pôles 11 et 12, le relais 10 est au repos et met sous tension l'électro-aimant 13 à noyau plongeur poussant 13a ayant pour rôle de désemparer la roue caoutchoutée 5 du barreau 2 par la simple action d'un bras de levier 14 articulé en 15 et tige 16 en appui sur la glissière 3, ladite tige 6 étant guidée comme représenté fig. 2, provoquant la rotation de la plaque support 7 libérant ainsi le barreau 2 qui par sa simple pesanteur et celle de la tôle de carénage 1 redescend au point mort bas, un fin de course non représenté a pour fonction d'interrompre la tension. Le maintien en appui de la roue caoutchoutée 5 sur le barreau 2 est provoqué par un ressort de rappel 17 reliant la plaque support 7 à la glissière 3.

Suivant un autre mode de réalisation représenté figs 4 et 5, afin que la tôle de carénage 1 redescende tant lorsqu'on libère la poignée 9 que lorsqu'on interrompt volontairement le courant ou que celui-ci soit interrompu involontairement, le dispositif est modifié au niveau de l'électro-aimant 13 à noyau plongeur, en effet celui-ci est disposé à l'opposé c'est-à-dire que lorsque l'électro-aimant est sous tension, exclusivement lorsqu'on saisit la poignée 9, le noyau plongeur 13b comprime une lame ressort 18 fixée sur la plaque support 7 entre la glissière 3 et l'électro-aimant 13 ce qui a pour effet de libérer le bras de levier 14 et de ce fait provoquer l'appui de la roue caoutchoutée 5 sur le barreau 2. Lorsque la poignée 9 est libérée ou que la tension électrique permettant de faire marcher la machine est interrompue volontairement ou involontairement, l'électro-aimant 13 n'est plus sous tension, par contre le noyau plongeur 13b est sollicité par la lame ressort 18 qui provoque l'action du noyau plongeur 13b sur le bras de levier 14 et de ce fait désempare la roue caoutchoutée 5 du barreau 2 et de la tôle de carénage 1.

Le dispositif objet de l'invention peut être utilisé chaque fois qu'une protection mobile à déplacement vertical est nécessaire tant pour les coupeuses à lames verticales que pour toutes autres machines dont l'usage présente un danger.

**Revendications**

1. Dispositif de protection adaptable aux coupeuses à lames verticales comportant une tôle mobile (1) de carénage et de protection de la lame fixée sur un barreau (2) coulissant dans une glissière (3) verticale fixée sur la coupeuse (4), l'élévation de la tôle (1) étant engendrée par contact d'une roue (5) animée en rotation s'appuyant sur le barreau (2), la descente étant provoquée lors du désemparage de la roue (5) du barreau (2), caractérisé par la rotation de la roue (5) au moyen d'un moto-réducteur (6) solidaire d'une plaque support (7) articulée en (8) sur la glissière (3) lors de la préhension de la poignée (9) servant à diriger la coupeuse (4), ladite poignée (9) étant pourvue de deux fils incrustés (11) et (12) enroulés en hélicoïde constituant deux pôles dont la liaison au contact de la peau humaine établit la mise en marche du moto-réducteur (6).

2. Dispositif de protection adaptable aux coupeuses à lames verticales selon la revendication 1, caractérisé par l'abandon de la poignée (9) provoquant la mise sous tension d'un électro-aimant (13) à noyau plongeur (13a) qui pousse un bras de levier (14) articulé en (15) prolongé par une tige (16) s'appuyant sur la glissière (3), ce qui engendre la rotation de la plaque support (7) articulée en (8) afin de désemparer la roue (5) du barreau (2), de sorte que par leur propre poids, le barreau (2) et la tôle de carénage (1) redescendent au point mort bas, dont un fin de course interrompt la mise sous tension de l'électro-aimant.

3. Dispositif de protection adaptable aux coupeuses à lames verticales selon la revendication 1, caractérisé par la roue (5) maintenue en appui sur le barreau (2) au moyen d'un ressort de rappel (17) fixé sur la glissière (3) et sur la plaque support articulée (7).

4. Dispositif de protection adaptable aux coupeuses à lames verticales selon la revendication 1, caractérisé par le désemparage de la roue (5) du barreau (2) mobile provoqué par une lame ressort (18) agissant sur le noyau plongeur (13b) et de ce fait sur le bras de levier (14) articulé en (15) lorsque l'alimentation électrique est interrompue soit par abandon de la poignée (9) ou interruption du courant.

5. Dispositif de protection adaptable aux coupeuses à lames verticales selon les revendications 1 et 4, caractérisé par la mise sous tension de l'électro-aimant (13) lors de la préhension de la poignée (9) engendrant la compression de la lame ressort (18) libérant le bras de levier (14), la roue (5) s'appuyant sur le barreau (2) coulissant au moyen du ressort de rappel (17) fixé sur la glissière (3) et sur la plaque support (7) articulée.

## Claims

1. A safety device adaptable to vertical blades cutters incorporating a mobile metal sheet guard (1) fixed to a bar (2) moving in a vertical slide (3) itself fastened to the cutter (4) to shield and protect the blade, the up movement of the guard (1) being produced by the contact of a rotating wheel (5) bearing a bar (2), the down movement being initiated when wheel (5) looses contact with bar (2) characteristically featured by the spinning of wheel (5) by means of a geared motor (6) fastened to a supporting plate (7) hinged at (8) to slide (3) when handle (9) by means of which the cutter is aimed, is held, the handle (9) being provided with two inlaid wires (11) and (12) helicoidaly wound and constitutive of two poles their connection by means of the human skin starts the geared motor (6).

2. A safety device adaptable to vertical blades cutters according to claim 1, characteristically featured by the release of handle (9) causing the activation of an electromagnet (13) with inside core (13a) which pushes a rocker arm (14) pivoted at (15) prolongated by rod (16) bearing on slide (3) so as to produce the rotation of supporting plate (7) hinged at (8) in order to lift wheel (5) from bar (2) so that bar (2) and guard (1) return by gravity only to their lowest neutral position where a safety switch cuts off the electromagnet connection.

3. A safety device adaptable to vertical blades cutters according to claim 1, characteristically featured by wheel (5) being maintained in contact with bar (2) by means of a return spring (17) fastened to slide (3) and to hinged supporting plate (7).

4. A safety device adaptable to vertical blades cutters according to claim 1, characteristically featured by the lifting of wheel (5) from mobile bar (2) being triggered by flat spring (18) activating inside core (13b) and thus pushing rocker arm (14) pivoted at (15) when the electrical connection in cutoff either due to the release of handle (9) or the current failure.

5. A safety device adaptable to vertical blades cutters according to claims 1 and 4, characteristically featured by the activation of the electro magnet (13) when handle (9) is held triggering the compression of flat spring (18) thus setting free, rocker arm (14) and wheel (5) till then bearing on sliding bar (2) under the action of return spring (17) fastened to slide (3) and to the hinged supporting plate (7).

## Patentansprüche

1. Schutzvorrichtung, die auf Schneidgeräte mit senkrechten Klingen angepasst werden kann und gekennzeichnet durch ein bewegliches Schutzblech (1), welches auf einem Stab (2) befestigt ist, die in einer senkrechten, an dem Schneidgerät (4) befestigten Führung (3) gleitet. Das Anheben des Bleches (1) wird durch den Kontakt eines angetriebenen Rades (5) hervorgerufen, das sich auf dem Stab (2) abstützt, gekennzeichnet durch die Drehung des Rades (5) durch einen Antrieb (6), der auf einer an der Führung (3) befestigten Halteplatte (7) sitzt, wobei die Drehung bei Ergreifen des Handgriffes (9) zum Führen des Schneidgerätes einsetzt und sich am Handgriff (9) zwei eingelassene Kabel (11) und (12) befinden, die spiralförmig gerollt sind und zwei Pole darstellen, deren Verbindung beim Kontakt mit der menschlichen Haut den Antrieb (6) auslöst.

2. Schutzvorrichtung nach Anspruch 1, die auf Schneidgeräte mit senkrechten Klingen angepasst werden kann und gekennzeichnet durch Loslassen des Griffes (9), welches ein Unterspannungsetzen eines Elektromagneten (13) mit Tauchkern (13a) auslöst, was einen Hebelarm (14) mit Gelenk in (15) vorschiebt, der durch eine auf die Führung (3) drückende Stange (16) verlängert wird, was eine Drehung der Halteplatte (7) mit Gelenk in (8) erwirkt, um so das Rad (5) von dem Stab (2) zu trennen, so dass das Schutzblech (1) und der Stab (2) durch ihr Eigengewicht auf den Nullpunkt absinken, wo ein Endausschalter die Spannung am Elektromagnet unterbricht.

3. Schutzvorrichtung nach Anspruch 1, die auf Schneidgeräte mit senkrechten Klinken angepasst werden kann, gekennzeichnet durch das Rad (5), das mit Hilfe einer an der Führung (3) und der gelenkigen Halteplatte (7) befestigten Rückholfeder (17) an den Stab (2) angehalten wird.

4. Schutzvorrichtung nach Anspruch 1, die auf Schneidgeräte mit senkrechten Klingen angepasst werden kann, gekennzeichnet durch die Tatsache, dass das Rad (5) von dem beweglichen Stab (2) durch eine Blattfeder (18) ferngehalten wird, die auf einen Tauchkern (13b) einwirkt und dadurch auch auf den gelenkigen (15) Hebelarm (14), wenn die Stromzufuhr entweder durch Loslassen des Griffes (9) oder durch Stromausschaltung unterbrochen wird.

5. Schutzvorrichtung nach den Ansprüchen 1 und 4, die auf Schneidgeräte mit senkrechten Klingen angepasst werden kann, gekennzeichnet durch das Unterspannungsetzen des Elektromagneten (13) beim Ergreifen des Griffes (9), was ein Zusammendrücken der Blattfeder (18) nach sich zieht, wodurch der Hebelarm (14) freigesetzt wird und das Rad (5) durch die an der Führung (3) und der gelenkigen Halteplatte (7) befestigte Rückholfeder (17) an den beweglichen Stab (2) angedrückt wird.

Fig.1

Fig.2

Fig.4

Fig.3

Fig.5